# EUROPEAN PATENT APPLICATION

(11) **EP 2 292 925 A2**
(43) Date of publication of application: **09.03.2011**
(21) Application number: 10175454.7
(22) Date of filing: 06.09.2010
(51) Int. Cl.: F03B 17/06, F03D 1/00, F03D 3/00

(54) **Electronic device including turbine for generating electricity**

(30) Priority: 08.09.2009 TW 98130280; 18.12.2009 TW 98143708
(71) Applicant: Hu, Sun-Yuan, Magong City, Penghu County 880 (TW)
(72) Inventor: Hu, Sun-Yuan, Magong City, Penghu County 880 (TW)
(74) Representative: 2K Patentanwälte Blasberg Kewitz & Reichel

(57) **Abstract**

An electronic device (100) including a frame (110), a fan (120), and at least one light emitting component (130) or light guiding component is provided. The fan is pivotally connected to the frame, and the at least one light emitting component or light guiding component is disposed on at least one of the frame and the fan.

## Description

### BACKGROUND OF THE INVENTION

### 1. Field of the Invention

The present invention relates to a device. More particularly, the present invention relates to a low cost electronic device capable of saving energy and reducing carbon emission.

### 2. Description of Related Art

Along with a highly aroused environmental protection consciousness, to achieve a purpose of energy saving and carbon reduction is an important research issue. Taking an electronic device (for example, a windmill) used for power generation as an example, the windmill is generally installed at a place having strong enough wind power, so as to rotate fans of the windmill through the wind power to convert kinetic energy of the fan rotation into electric power. In this way, a nature resource is used to generate power, so as to achieve the purpose of carbon reduction.

### SUMMARY OF THE INVENTION

The present invention is directed to a low cost electronic device capable of saving energy and reducing carbon emission and meanwhile having an aesthetic lighting function.

The present invention provides an electronic device having a frame, a fan, and a plurality of light emitting components or light guiding components. The fan is pivotally connected to the frame, and the light emitting components or the light guiding components are disposed on at least one of the frame and the fan.

In an embodiment of the present invention, the light emitting components or the light guiding components and a plurality of blades of the fan are formed integrally.

In an embodiment of the present invention, the light emitting components or the light guiding components are disposed on a plurality of blades of the fan, wherein the blades are hollowed blades, so as to fit or install the light emitting components or the light guiding components therein. Alternatively, the light emitting components or the light guiding components are attached or assembled on the blades.

In an embodiment of the present invention, materials of the blades are transparent materials.

In an embodiment of the present invention, the frame includes a self-induction power supply coil base, a plurality of self-induction power supply coils, a magnet base, a magnet, a bracket shell and a rotation bearing. The self-induction power supply coils are disposed in the self-induction power supply coil base, the magnet covers the magnet base, the self-induction power supply coils and the self-induction power supply coil base are disposed between the bracket shell and the fan, and the rotation bearing penetrates through the bracket shell, the magnet base and the fan, and is assembled with the fan. Moreover, the frame further includes a plurality of assembling screws, and the assembling screws penetrate through the self-induction power supply coil base and the fan to assemble the self-induction power supply coil base and the fan. In addition, the frame further includes a fairing, and the fan is disposed between the fairing and the bracket shell.

In an embodiment of the present invention, the electronic device further includes a circuit substrate disposed between the fan and the self-induction power supply coils, wherein the circuit substrate has a pin socket, and the self-induction power supply coils are connected to a pin to guide currents of the self-induction power supply coils to a power storage system, or the pin is inserted to the pin socket on the circuit substrate to directly provide power required by the circuit substrate. Moreover, when the light emitting components are used, the circuit substrate has a control chip electrically connected to the light emitting components, and the control chip is used to control light emitting and image displaying of the light emitting components. Moreover, the circuit substrate has a plurality of light emitting component data control flat cable sockets, and data control flat cables are correspondingly inserted into the light emitting component data control flat cable sockets to control light emitting and image displaying of the light emitting components.

In an embodiment of the present invention, the light emitting components or the light guiding components are radially arranged.

In an embodiment of the present invention, each of the light emitting components includes a light emitter and a data control flat cable, the light emitter and the data control flat cable are integrated and connected, and the data control flat cables are correspondingly inserted in the data control flat cable sockets.

In an embodiment of the present invention, the circuit substrate has a control chip and at least one light source, wherein the control chip is electrically connected to the light source for controlling light emitting and image displaying of the light source, and the light guiding components are disposed at periphery of the light source.

In an embodiment of the present invention, the light emitting components are organic light emitting diodes (OLEDs), inorganic LEDs, cold cathode fluorescent lamps (CCFLs) or combinations thereof.

In an embodiment of the present invention, the light guiding components are fibers.

According to the above descriptions, in the electronic device of the present invention, the light emitting components or the light guiding components are disposed on the frame or the fan, so that the light emitting components or the light guiding components can emit light or display images when the fan of the electronic device is rotated, so as to increase a utilization aesthetics of the electronic device.

In order to make the aforementioned and other features and advantages of the present invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram illustrating an electronic device according to an embodiment of the present invention.

FIG. 2A is an enlarged diagram of a circuit substrate.

FIG. 2B is a partial enlarged diagram of a self-induction power supply coil base.

FIG. 3A is a schematic diagram illustrating a water-driven waterwheel serving as an implementation of an electronic device.

FIG. 3B is a schematic diagram illustrating a general wind-driven windmill serving as an implementation of an electronic device.

FIG. 3C is a schematic diagram illustrating a general handheld windmill serving as an implementation of an electronic device.

FIG. 3D is a schematic diagram illustrating a vertical axis fan serving as an implementation of an electronic device.

FIG. 4A is a schematic diagram illustrating an electronic device according to another embodiment of the present invention.

FIG. 4B is an enlarged diagram of a circuit substrate of FIG. 4A.

### DESCRIPTION OF THE EMBODIMENTS

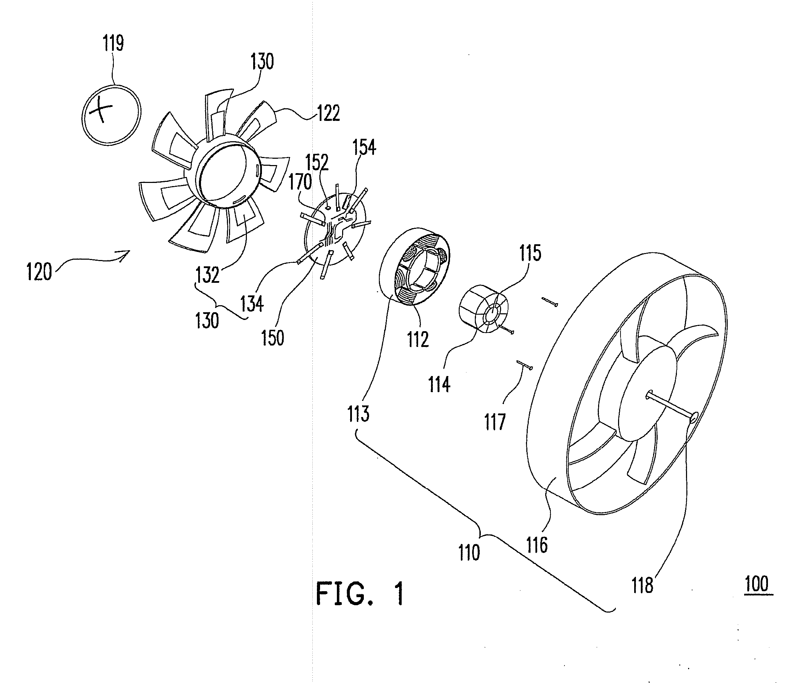

FIG. 1 is a schematic diagram illustrating an electronic device according to an embodiment of the present invention. Referring to FIG. 1, the electronic device 100 of the present embodiment includes a frame 110, a fan 120 and at least one light emitting component 130. The fan 120 is pivotally connected to the frame 110, and the light emitting components 130 are disposed on at least one of the frame 110 and the fan 120.

The frame 110 includes a plurality of self-induction power supply coils 112, a self-induction power supply coil base 113, a magnet 114, a magnet base 115, a bracket shell 116 and a rotation bearing 118. The magnet base 115 is disposed in the bracket shell 116. The self-induction power supply coils 112 are disposed in the self-induction power supply coil base 113, and the self-induction power supply coil base 113 is disposed between the bracket shell 116 and the fan 120. The rotation bearing 118 penetrates through the bracket shell 116, the magnet base 115, a circuit substrate 150 and the fan 120. The fan 120 can drive the self-induction power supply coil base 113 to rotate along the rotation bearing 118, so as to rotate the self-induction power supply coils 112, so that the self-induction power supply coils 112 can be rotated relative to the magnet 114 to generate an induction current. The induction current is guided to a self-induction power supply coil pin socket 152 through a self-induction power supply coil pin 112a, so as to provide current required by the circuit substrate 150.

Moreover, the frame 110 further includes a plurality of assembling screws 117, and the assembling screws 117 penetrate through the self-induction power supply coil base 113 and the circuit substrate 150 to assemble the fan 120, the self-induction power supply coil base 113 and the circuit substrate 150. In addition, the frame 110 further includes a fairing 119, and the fan 120 is disposed between the fairing 119 and the bracket shell 116. Moreover, the light emitting component 130 includes a light emitter 132 and a data control flat cable 134, and the light emitter 132 and the data control flat cable 134 are integrated and connected. The light emitting component 130 of the present embodiment can be an organic light emitting diode (OLED), an inorganic LED, a cold cathode fluorescent lamp (CCFL) or combinations thereof.

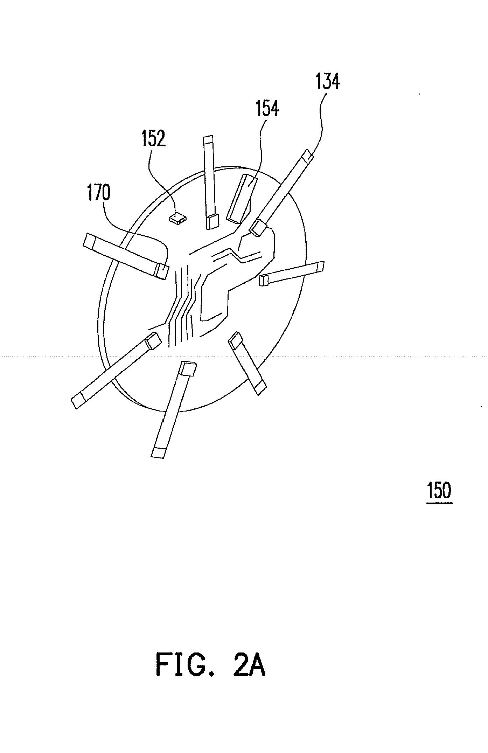

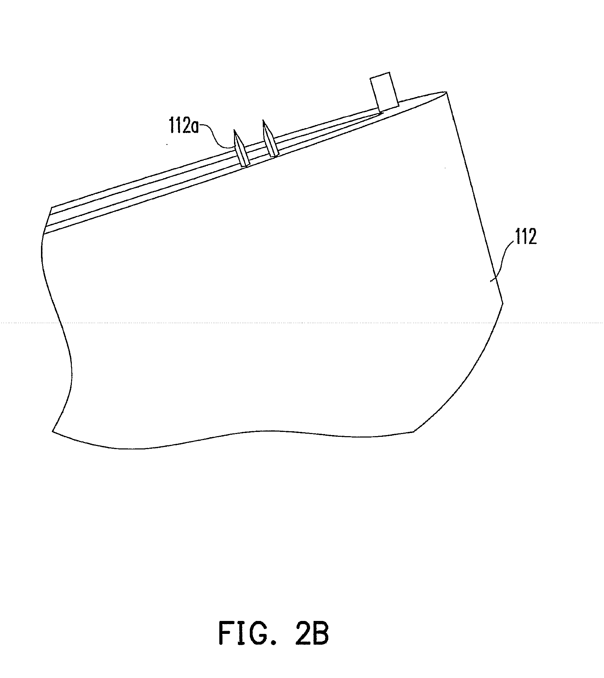

The electronic device 100 further includes the circuit substrate 150 disposed between the fan 120 and the self-induction power supply coils 112, wherein the self-induction power supply coils 112 are electrically connected to the circuit substrate 150. FIG. 2A is an enlarged diagram of the circuit substrate, and FIG. 2B is a partial enlarged diagram of the self-induction power supply coil base. Referring to FIG. 2A and FIG. 2B, the circuit substrate 150 has the self-induction power supply coil pin socket 152, and the self-induction power supply coils 112 have the self-induction power supply coil pin 112a. The self-induction power supply coil pin 112a is correspondingly inserted into the self-induction power supply coil pin socket 152 for electrical connection. Moreover, the circuit substrate 150 further has a control chip 154, and the control chip 154 is electrically connected to the light emitter 132 of the light emitting component 130 through the data control flat cable 134 inserted in a data control flat cable socket 170, so that the control chip 154 can control light emitting and image displaying of the organic LED 130. Moreover, the circuit substrate 150 has a plurality of the data control flat cable sockets 170, which are used for electrically connecting the light emitting components 130 and the circuit substrate 150.

Referring to FIG. 1 and FIG. 2A, the light emitting components 130 and the blades 122 of the fan 120 can be formed integrally, wherein the blades 122 are hollowed blades, so that the light emitting components 130 can be fit or installed on the blades 122. Alternatively, the light emitting components 130 can also be attached or assembled on the blades 122 according to an actual design requirement. Materials of the blades 122 can be transparent materials, so that the light emitted by the light emitting components 130 is not shielded and is transmitted through the blades 122. Certainly, a fog treatment can also be performed to the blades 122 according to an actual demand, so that when the light emitting components 130 emit light, a light emitting pattern of the electronic device 100 can be more splendid and changeful. Moreover, a shape of the light emitting component 130 can be designed according to an actual demand.

In detail, when the blades 122 of the fan 120 are rotated along the rotation bearing 118 due to disturbance of wind or water, the electronic device 100 starts to operate, and rotation of the fan 120 results in an electromagnetic conversion between the self-induction power supply coils 112 and the magnet 114 to generate electric power. The electronic device 100 can be further connected to a power storage device (not shown), so that the electric power generated due to the rotation of the fan 120 is transmitted from the self-induction power supply coil pin 112a of the self-induction power supply coils 112 to the power storage device (not shown), and stored therein through the self-induction power supply coil pin socket 152. It should be noticed that since the light emitting components 130 are flexible, the light emitting components 130 can be easily fitted to different kinds of the blades 122. The blades 122 can be hydrodynamic waterwheel blades or aerodynamic fan blades, or the light emitting components 130 and the hydrodynamic waterwheel blades or the aerodynamic fan blades can be formed integrally. While the hydrodynamic waterwheel blades or the aerodynamic fan blades are rotated to generate electric power through the natural water or wind power to achieve an energy saving and a carbon reduction effects, the light emitting components 130 can emit light, so that the electronic device 100 can simultaneously have a lighting function.

Moreover, the control chip 154 can have in-built control programs for controlling light emitting and image displaying of the light emitting components 130 when the blades 122 of the fan 120 are rotated, so that the electronic device 100 can achieve a large area lighting and image displaying effect or a rotation lighting and image displaying effect, and color variation thereof can be further controlled. Therefore, the electronic device 100 can not only use the natural wind power or water power to generate electric power to achieve the energy saving and the carbon reduction effects, but can also achieve aesthetic lighting and image displaying effects, so that variability and interestingness of the electronic device 100 during the lighting and image displaying are increased.

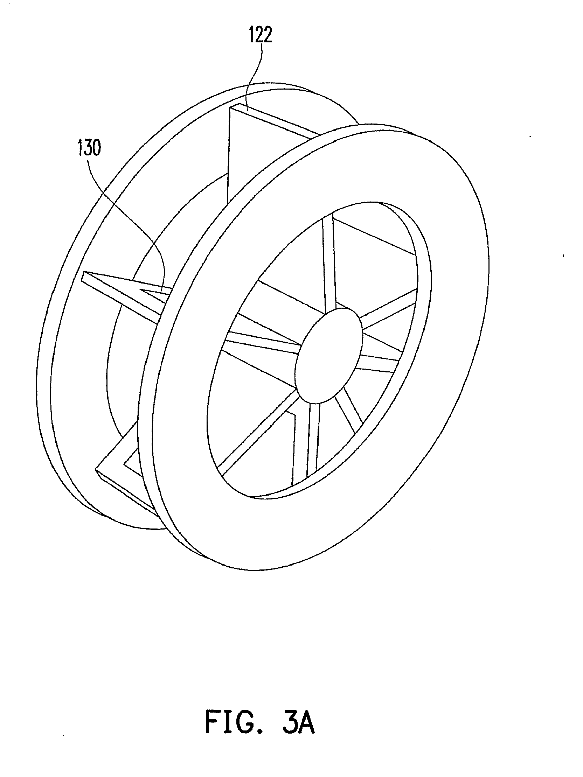

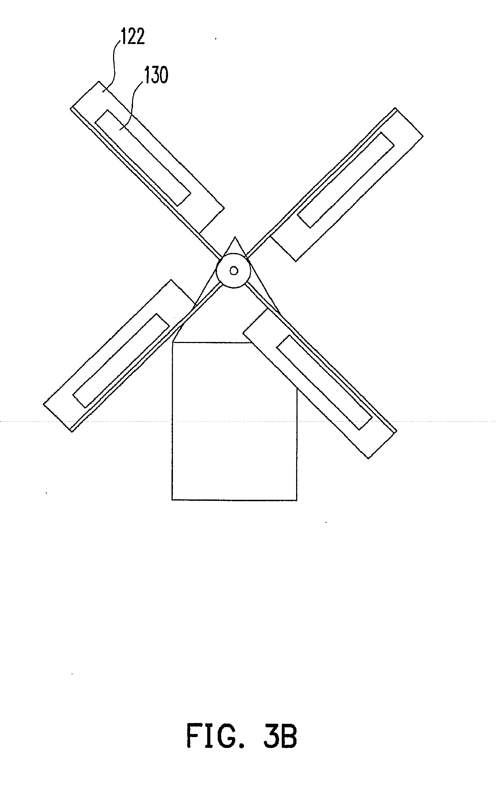

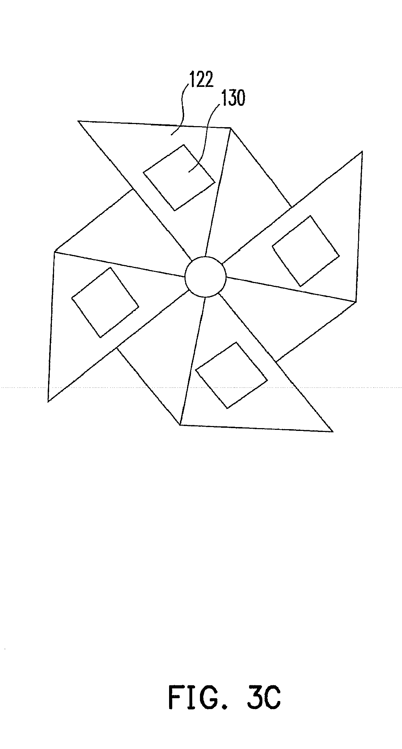

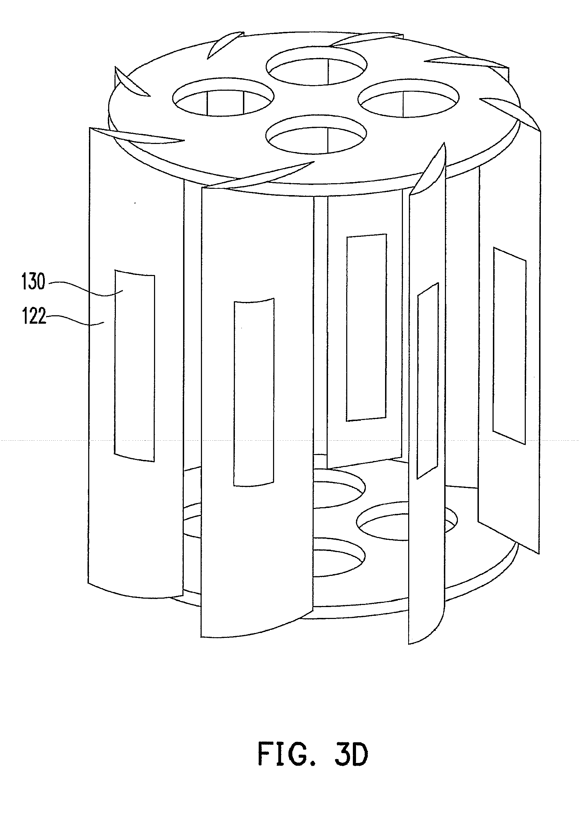

In the present embodiment, although the light emitting components 130 are assumed to be disposed on the blades 122, configuration positions of the light emitting components 130 can also be varied according to a design requirement, for example, the light emitting components 130 are disposed on the bracket shell 116 or the fairing 119. Moreover, the electronic device 100 is not limited to the implementation type of FIG. 1, which can also be a wind power generator, a water-driven waterwheel (shown in FIG. 3A), a general wind-driven windmill (shown in FIG. 3B), an electric fan, propeller spiral blades of an aircraft, a ship or a helicopter, a hand fan, a ventilator, a general handheld windmill (shown in FIG. 3C), a vertical axis fan (shown in FIG. 3D) or a cooling fan of a computer, etc. In various implementations of the electronic device 100 shown in FIGs. 3A-3D, referential numerals of the aforementioned blade 122 and the light emitting component 130 are used. In addition, the light emitting components 130 can also be implemented by other types of light sources, such as LEDs, or combinations of the other types of light sources according to an actual requirement.

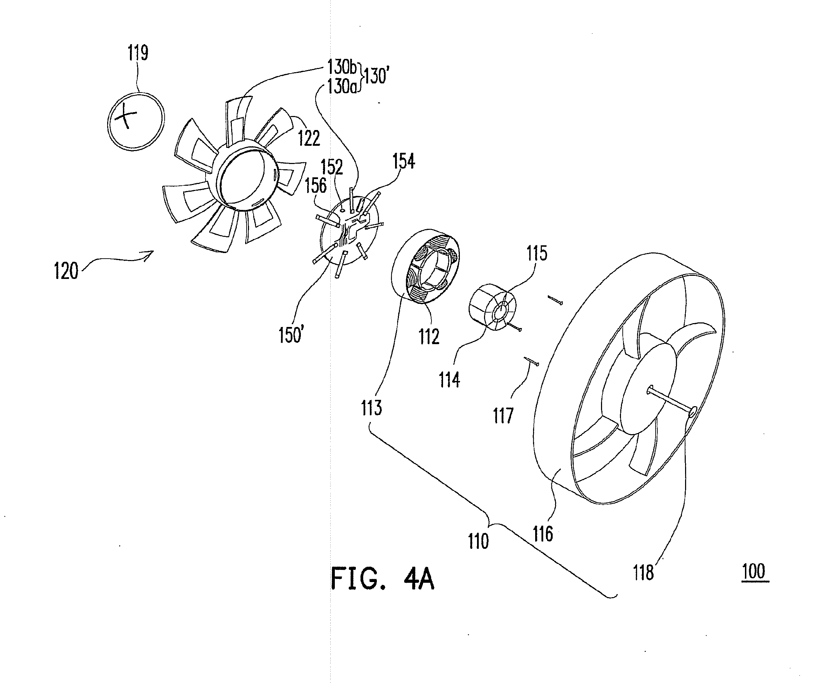

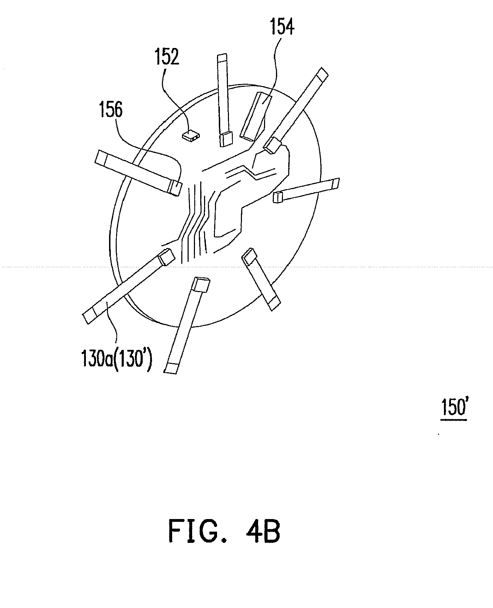

It should be noticed that in the above embodiment, although the light emitting components 130 are taken as an example, the light emitting components 130 can also be replaced by light guiding components, and the purpose of the present invention can also be achieved. FIG. 4A is a schematic diagram illustrating an electronic device according to another embodiment of the present invention, and FIG. 4B is an enlarged diagram of a circuit substrate of FIG. 4A. Referring to FIG. 4A and FIG. 4B, a difference there between is that light guiding components 130' are used to replace the light emitting components 130, and light sources 156 (seven light sources 156 are illustrated in FIG. 4B) are disposed on the circuit substrate 150'. The light sources 156 are electrically connected to the control chip 154, and the light guiding components 130' are disposed aside the light sources 156. Each of the light guiding components 130' may have two parts 130a and 130b, and the light guiding components 130' can guide the light emitted from the light sources 156 to achieve a light emitting effect. The light guiding components 130' can be fibers or other types of light guiding substances according to an actual demand. Moreover, although the light guiding component 130' is divided into two parts 130a and 130b due to an assembling requirement, it can also be divided into a plurality of parts according to an actual demand, or the light guiding component 130' can be only one fiber, and the fiber penetrates through a frame of the fan 120 and is assembled with the blade 122.

In summary, in the present invention, the light emitting components or the light guiding components are, for example, disposed on the hydrodynamic waterwheel blades or the aerodynamic fan blades, so that electric power can be generated or stored when the electronic device is operated, so as to achieve the energy saving and carbon reduction effects. Meanwhile, the electronic device also has a lighting function and the light emitting and image displaying functions, so as to increase interestingness of lighting in the night. Moreover, since the light emitting components or the light guiding components can replace a part of the blade materials, a material cost of the electronic device can be saved. In addition, since the electronic device can emit light by itself, a cost for additionally configuring a lighting equipment around the electronic device can be saved.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An electronic device (100), comprising:
a frame (110);
a fan (120), pivotally connected to the frame (110); and
a plurality of light emitting components (130) or light guiding components (130'), wherein the light emitting components (130) or the light guiding components (130') are disposed on at least one of the frame (110) and the fan (120).

2. The electronic device (100) as claimed in claim 1, wherein the light emitting components (130) or the light guiding components (130') and a plurality of blades (122) of the fan (120) are formed integrally.

3. The electronic device (100) as claimed in claim 1, wherein the light emitting components (130) or the light guiding components (130') are disposed on a plurality of blades (122) of the fan (120).

4. The electronic device (100) as claimed in claim 3, wherein the blades (122) are hollowed to facilitate fitting or installing the light emitting components (130) or the light guiding components (130') in the blades (122).

5. The electronic device (100) as claimed in claim 3, wherein the light emitting components (130) or the light guiding components (130') are attached or assembled on the blades (122).

6. The electronic device (100) as claimed in claim 2, wherein materials of the blades (122) are transparent materials.

7. The electronic device (100) as claimed in claim 1, wherein the frame (110) comprises:
a self-induction power supply coil base (113);
a plurality of self-induction power supply coils (112), disposed in the self-induction power supply coil base (113);
a magnet base (115);
a magnet (114), covering the magnet base (115);
a bracket shell (116), wherein the self-induction power supply coils (112) and the self-induction power supply coil base (113) are disposed between the bracket shell (116) and the fan (120); and
a rotation bearing (118), penetrating through the bracket shell (116), the magnet base (115) and the fan (120), and assembled with the fan (120).

8. The electronic device (100) as claimed in claim 7, wherein the frame (110) further comprises a plurality of assembling screws (117) for assembling the self-induction power supply coil base (113) and the fan (120).

9. The electronic device (100) as claimed in claim 7, wherein the frame (110) further comprises a fairing (119), and the fan (120) is disposed between the fairing (119) and the bracket shell (116).

10. The electronic device (100) as claimed in claim 7, further comprising a circuit substrate (150) disposed between the fan (120) and the self-induction power supply coil base (113), wherein the self-induction power supply coils (112) are electrically connected to the circuit substrate (150), and the rotation bearing (118) passes through the circuit board (150).

11. The electronic device (100) as claimed in claim 10, wherein the circuit substrate (150) has a pin socket (152), the self-induction power supply coil base (113) has a pin (112a) for guiding currents of the self-induction power supply coils (112), and the pin (112a) is inserted into the pin socket (152) of the circuit substrate (150) for electrical connection.

12. The electronic device (100) as claimed in claim 10, wherein the circuit substrate (150) has a control chip (154) electrically connected to the light emitting components (130), so as to control light emitting and image displaying of the light emitting components (130).

13. The electronic device (100) as claimed in claim 10, wherein the circuit substrate (150) has a plurality of light emitting component data control flat cable sockets (170).

14. The electronic device (100) as claimed in claim 1, wherein the light emitting components (130) or the light guiding components (130') are radially arranged.

15. The electronic device (100) as claimed in claim 13, wherein each of the light emitting components (130) comprises a light emitter (132) and a plurality of data control flat cables (134), the light emitter (132) and the data control flat cables (134) are integrated and connected, and the data control flat cables (134) are correspondingly inserted in the light emitting component data control flat cable sockets (170).

16. The electronic device (100) as claimed in claim 1, wherein the light emitting components (130) are organic light emitting diodes (OLEDs), inorganic LEDs, cold cathode fluorescent lamps (CCFLs) or combinations thereof.

17. The electronic device (100) as claimed in claim 10, wherein the circuit substrate (150') has a control chip (154) and at least one light source (156), the control chip (154) is electrically connected to the at least one light source (156) for controlling light emitting and image displaying of the light source (156), and the light guiding components (130') are disposed at periphery of the light source (156).

18. The electronic device (100) as claimed in claim 1, wherein the light guiding components (130') are fibers.
